# EUROPEAN PATENT SPECIFICATION

(11) **EP 1 289 884 B1**
(45) Date of publication and mention of the grant of the patent: **22.08.2012**
(21) Application number: 01930495.5
(22) Date of filing: 12.04.2001
(51) Int. Cl.: C01B 33/38

(54) **SYNTHETIC PLATY MAGADIITE AND OCTASILICATE**
SYNTHETISCHES PLÄTTCHENFÖRMIGES MAGADIIT UND OKTASILIKAT
MAGADIITE SYNTHETIQUE LAMELLAIRE ET OCTASILICATE

(30) Priority: 14.04.2000 US 197250 P
(43) Date of publication of application: 12.03.2003
(73) Proprietor: Dow Global Technologies LLC, Midland, MI 48674 (US)
(72) Inventor: GARCES, Juan, M., Midland, MI 48640 (US); LAKSO, Steve, R., Shepherd, MI 48883 (US); SCHOEMAN, Brian, J., Midland, MI 48642 (US)
(74) Representative: Raynor, John
(86) International application number: PCT/US2001/011978
(87) International publication number: WO 2001/083370

(56) References cited:
- DD-A- 220 585
- DD-A- 221 723
- US-A- 4 626 421
- US-A- 4 806 327
- US-A- 5 236 882

## Description

This invention is in the field of layered hydrated crystalline polysilicates. More specifically, the invention relates to magadiite layered hydrated crystalline polysilicates.

Makatite (Na₂O·4SiO₂·5H₂O), kanemite (Na₂O·4SiO₂·7H₂O), octasilicate (Na₂O·8SiO₂·9H₂O), magadiite (Na₂O·14SiO₂·10H₂O) and kenyaite (Na₂O·22SiO₂·10H₂O) are a series of sodium polysilicate hydrates, Almond et al., "A structural consideration of kanemite, octasilicate, magadiite and kenyaite". Makatite, kanemite, octasilicate, magadiite and kenyaite are useful, for example, in the preparation of materials for catalysis.

Magadiite was first discovered as a natural material and then synthesized in the laboratory. Natural magadiite tends to be in the form of several nanometer thick square plates that are several micrometers on a side. However, synthetic magadiite tends to be in the form of spherical cabbage-like aggregates about ten micrometers in diameter, Garces, et. al., Clays and Clay Minerals, 1988, 409-418. Synthetic magadiite can be prepared hydrothermally by heating a colloidal silica suspension characterized as 9 moles of SiO₂, 2 moles NaOH and 75 moles of water at 100 degrees Celsius for 4 weeks, Lagaly et al., Am. Mineral. 1975, 642.

The "aspect ratio" (plate length/plate, thickness) of magadiite in the form of individual plates is relatively high (100 or more). The aspect ratio of magadiite in the form of cabbage-like aggregates is relatively low (about 1).

Fillers dispersed in a polymer are well known to improve some of the physical properties of the polymer such as the tensile and flex modulus of the polymer. When at least one dimension of the filler is less than one micron and when the aspect ratio of the filler is relatively high, then the improvement can be especially beneficial, that is, "nanocomposite polymer systems", for example, United States Patent 5,717,000. Therefore, natural magadiite would be expected to be useful to prepare a nanocomposite polymer system. However, natural magadiite is relatively expensive for such an application. Synthetic magadiite is expected to be less expensive but its low aspect ratio would not allow its use to make a nanocomposite polymer. Various methods are known for preforming synthetic silicates such as magadiites, for example as described in US-A-5236882, US-A-4626421, US-A-4806327, DD221723, and DD220585. It would be an advance in the art if a synthetic magadiite could be prepared in the form of separate plates rather than as cabbage-like agglomerates.

This invention, in one embodiment, is a method for producing synthetic magadiite, comprising the step of: heating a liquid aqueous colloidal silica suspension to a temperature of from 140°C to 180°C, the liquid aqueous colloidal silica suspension having a mole ratio of sodium hydroxide to silica of from 0.4 to 0.5 and a mole ratio of water to silica of from 5 to 39 wherein more than fifty percent by weight of the synthetic magadiite is platy synthetic magadiite.

In another embodiment, the instant invention is synthetic magadiite producible by the above method, wherein more than fifty percent by weight of the synthetic magadiite is in the form of individual plates.

In another embodiment, the invention is a method of preparing a silica gel comprising contacting the synthetic platy magadiite with an acid in an aqueous liquid.

In another embodiment, the invention is synthetic platy magadiite wherein at least a portion of the sodium ions of the synthetic platy magadiite are exchanged for hydrogen ions to produce acidified synthetic platy magadiite.

In another embodiment, the invention is the acidified synthetic platy magadiite sufficiently heated to drive off water from the acidified synthetic platy magadiite to form silica plates.

In another embodiment, the invention is the acidified synthetic platy magadiite wherein the surface hydroxyls of the acidified synthetic platy magadiite are alkylated.

### BRIEF DESCRIPTION OF THE DRAWINGS

Fig. 1 is a plot of moles of NaOH/SiO₂ v. Moles of H₂O/SiO₂ showing various results within and outside of the instant invention;
Fig. 2 is a photomicrograph of platy synthetic magadiite of the instant invention; and
Fig. 3 is a photomicrograph of synthetic magadiite of the prior art showing the cabbage-like agglomerates associated therewith

### DETAILED DESCRIPTION OF THE INVENTION

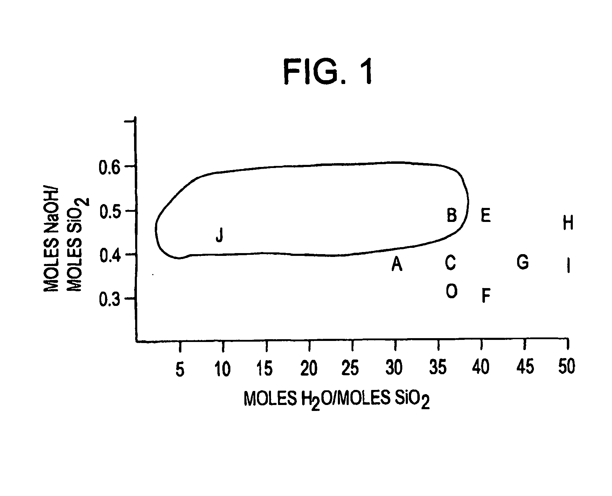

Referring now to Fig. 1, therein is shown a plot of moles of NaOH/SiO₂ v. moles of H₂O/SiO₂ showing various results A, B, C, E, F, G, H, I, J & O within and outside of the instant invention. Each colloidal silica suspension described in Fig. 1 is heated to 160 degrees Celsius for 24 hours to produce synthetic magadiite, which is then examined by electron microscopy.

The result for A is more single plates than cabbage-like agglomerates on a weight basis.

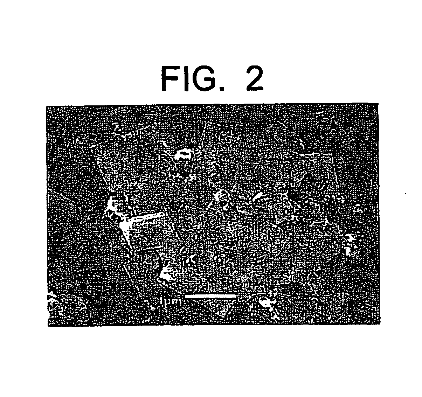

The result for B is essentially all single plates shown in Fig. 2.

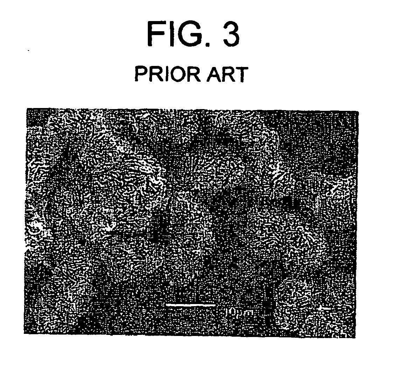

The result for C is essentially all cabbage-like agglomerates shown in Fig. 3.

The result for D is mostly amorphous silica.

The result for E is mostly cabbage-like agglomerates with some plates on a weight basis.

The result for F is mostly cabbage-like agglomerates.

The result for G is cabbage-like agglomerates.

The result for H is cabbage-like agglomerates.

The result for I is mostly cabbage-like agglomerates with some plates on a weight basis.

The result for J is essentially all plates.

The oval drawn on Fig. 1 shows the preferred range of the mole ratio of sodium hydroxide to silica and water to silica of the instant invention. The most preferred range of the mole ratio of sodium hydroxide to silica and water to silica of the instant invention would be a smaller oval inside the oval shown in Fig. 1. In the broad scope of the instant invention, the mole ratio of sodium hydroxide to silica and a mole ratio of water to silica must be effective to produce a synthetic magadiite wherein more than fifty percent by weight of the synthetic magadiite is platy synthetic magadiite. Preferably, the mole ratio of sodium hydroxide to silica is in the range of from 0.4 to 0.5, the mole ratio of water to silica is in the range of from 5 to 39. More preferably, the mole ratio of sodium hydroxide to silica is in the range of from 0.48 to 0.52 and the mole ratio of water to silica is in the range of from 25 to 39.

The temperature used is preferably from 140 degrees to 170 degrees. At temperatures above 170 degrees, for example, 180 degrees or 190 degrees or 200 degrees Celsius, the yield of platy synthetic magadiite is progressively lower. At temperatures below 140 degrees Celsius, for example, 130 degrees, 120 degrees or 110 degrees Celsius, the rate of formation of platy synthetic magadiite is progressively slower. However, adding magadiite seed, for example, at the 10 weight percent level, to the aqueous colloidal silica suspension reduces the time needed at 160 degrees Celsius to 8 hours or less.

The synthetic magadiite produced is more than fifty percent by weight in the form of individual plates v. the cabbage-like agglomerates. More preferably, the synthetic magadiite produced is more than eighty percent by weight in the form of individual plates v. the cabbage-like agglomerates. Most preferably, the synthetic magadiite produced is more than ninety percent by weight in the form of individual plates v. the cabbage-like agglomerates and preferably also contains less than two percent by weight of amorphous silica.

When the platy magadiite of the instant invention is contacted with an acid in an aqueous suspension, then a new form of silica gel is produced (having a network of plates). Similarly, when the platy magadiite of the instant invention is contacted with colloidal silica and an acid in an aqueous suspension, then another new form of silica gel is produced (having a network of plates and spheres).

At least a portion of the sodium ions of the synthetic platy magadiite of the instant invention can be exchanged for hydrogen ions to produce acidified synthetic platy magadiite. When the portion of the sodium ions of the synthetic platy magadiite of the instant invention is ninety percent or more and such acidified synthetic platy magadiite (or perhaps more accurately platy silica) is heated sufficiently to drive off water, then the acidified synthetic platy magadiite is converted into quartz-like silica plates. On the other hand, the acidified synthetic platy magadiite can also be alkylated via the Si-O-H moiety to produce Si-O-R, where the R group is an alkyl group, for example, butyl. Such alkylated materials are lipophilic and as such are more compatible with many polymers. A fraction of B₂O₄ can be substituted for the SiO₂ so that the boron-substituted platy synthetic magadiite can be treated with sodium aluminate to produce an aluminated platy synthetic magadiite to be used, for example, as a catalyst activator.

## Claims

1. A method for producing synthetic magadiite, comprising the step of: heating a liquid aqueous colloidal silica suspension to a temperature of from 140°C to 180°C, the liquid aqueous colloidal silica suspension having a mole ratio of sodium hydroxide to silica of from 0.48 to 0.52 and a mole ratio of water to silica of from 25 to 39 wherein more than fifty percent by weight of the synthetic magadiité is platy synthetic magadiite.

2. A method of Claim 1, wherein magadiite seed is added to the aqueous colloidal silica suspension.

3. A method of Claim 2, wherein the magadiite seed is added at the 10 weight percent level.

4. A method of Claim 1, wherein a fraction of B₂O₄ is substituted for the SiO₂ so that the product is boron-substituted platy synthetic magadiite that can be treated with sodium aluminate to produce an aluminated platy synthetic magadiite.

5. Synthetic magadiite producible by a process in accordance with any one of the preceding claims, wherein more than fifty percent by weight of the synthetic magadiite is platy magadiite.

6. Synthetic magadiite as claimed in Claim 5, wherein more than eighty percent by weight of the synthetic magadiite is platy magadiite.

7. Synthetic magadiite as claimed in Claim 6, wherein more than ninety percent by weight of the synthetic magadiite is platy magadiite.

8. A method for producing silica gel, comprising contacting the synthetic platy magadiite of any one of Claims 5 to 7 with an acid in an aqueous liquid.

9. A method for producing silica gel, comprising contacting the synthetic platy magadiite of any one of Claims 5 to 7 with colloidal silica and an acid in an aqueous liquid.

10. A synthetic platy magadiite of any one of Claims 5 to 7, wherein at least a portion of the sodium ions of the synthetic platy magadiite are exchanged for hydrogen ions to produce acidified synthetic platy magadiite.

11. A synthetic platy magadiite according to Claim 10, wherein more than ninety percent of the sodium ions of the synthetic platy magadiite are exchanged for hydrogen ions to produce acidified synthetic platy magadiite.

12. An acidified synthetic platy magadiite according to Claim 11, sufficiently heated to drive off water from the acidified synthetic platy magadiite to form silica plates.

13. An acidified synthetic platy magadiite according to Claim 10 or Claim 11, wherein the surface hydroxyls of the acidified synthetic platy magadiite are alkylated.

14. A synthetic platy magadiite according to Claim 13, wherein the surface hydroxyls of the acidified synthetic platy magadiite are butylated.

## Patentansprüche

1. Verfahren zur Herstellung von synthetischem Magadiit, umfassend schritt: Erhitzen einer flüssigen wässrigen kolloidalen Siliziumdioxid-Suspension auf eine Temperatur von 140°C bis 180°C, wobei die flüssige wässrige kolloidale Siliziumdioxid-Suspension ein Mol-Verhältnis von Natriumhydroxid zu Siliziumdioxid von 0,48 bis 0,52 und ein Mol-Verhältnis von Wasser zu Siliziumdioxid von 25 zu 39 aufweist, wobei mehr als fünfzig Gewichtsprozent des synthetischen Magadiits plattenförmiges synthetisches Magadiit ist.

2. Verfahren nach Anspruch 1, wobei Magadiit-Korn zu der wässrigen kolloidalen Siliziumdioxid-Suspension gegeben wird.

3. Verfahren nach Anspruch 2, wobei das Magadiit-Korn mit einer Konzentration von 10 Gewichtsprozent zugegeben wird.

4. Verfahren nach Anspruch 1, wobei eine Fraktion von B₂O₄ gegen das SiO₂ substituiert wird, so dass das Produkt Bor-substituiertes plattenförmiges synthetisches Magadiit ist, das mit Natrium-Aluminat behandelt werden kann, um ein aluminiertes plattenförmiges synthetisches Magadiit herzustellen.

5. Synthetisches Magadiit, herstellbar durch ein Verfahren nach einem der vorhergehenden Ansprüche, wobei mehr als fünfzig Gewichtsprozent des synthetischen Magadiits plattenförmiges Magadiit ist.

6. Synthetisches Magadiit nach Anspruch 5, wobei mehr als achtzig Gewichtsprozent des synthetischen Magadiits plattenförmiges Magadiit ist.

7. Synthetisches Magadiit nach Anspruch 6, wobei mehr als neunzig Gewichtsprozent des synthetischen Magadiits plattenförmiges Magadiit ist.

8. Verfahren zur Herstellung von Kieselgel, umfassend in Kontakt bringen des synthetischen plattenförmigen Magadiits nach einem der Ansprüche 5 bis 7 mit einer Säure in einer wässrigen Flüssigkeit.

9. Verfahren zur Herstellung von Kieselgel, umfassend in Kontakt bringen des synthetischen plattenförmigen Magadiits nach einem der Ansprüche 5 bis 7 mit kolloidalem Siliziumdioxid und einer Säure in einer wässrigen Flüssigkeit

10. Synthetisches plattenförmiges Magadiit nach einem der Ansprüche 5 bis 7, wobei mindestens ein Teil der Natriumionen des synthetischen plattenförmigen Magadiits gegen Wasserstoff-Ionen ausgetauscht werden, um angesäuertes synthetisches plattenförmiges Magadiit herzustellen.

11. Synthetisches plattenförmiges Magadiit nach Anspruch 10, wobei mehr als neunzig Prozent natriumionen des synthetischen plattenförmigen Magadiits gegen Wasserstoff-Ionen ausgetauscht werden, um angesäuertes synthetisches plattenförmiges Magadiite herzustellen.

12. Angesäuertes synthetisches plattenförmiges Magadiit nach Anspruch 11, das ausreichend erhitzt ist, um Wasser aus dem angesäuerten synthetischen plattenförmigen Magadiit auszutreiben, um Siliziumdioxidplatten zu bilden.

13. Angesäuertes synthetisches plattenförmiges Magadiit nach Anspruch 10 oder Anspruch 11, wobei die Oberflächen-Hydroxyle des angesäuerten synthetischen Magadiits alkyliert sind.

14. Angesäuertes synthetisches plattenförmiges Magadiit nach Anspruch 13, wobei die Oberflächen-Hydroxyle des angesäuerten synthetischen plattenförmigen Magadiits butyliert sind.

## Revendications

1. Procédé de production de magadiite synthétique, comportant une étape où l'on chauffe, à une température de 140 à 180 °C, une suspension liquide aqueuse de silice colloïdale dans laquelle le rapport molaire de l'hydroxyde de sodium à la silice vaut de 0,48 à 0,52 et le rapport molaire de l'eau à la silice vaut de 25 à 39, grâce à quoi une fraction de plus de 50 % en poids de la magadiite synthétique est de la magadiite synthétique lamellaire.

2. Procédé conforme à la revendication 1, dans lequel on ajoute des germes de magadiite à la suspension aqueuse de silice colloïdale.

3. Procédé conforme à la revendication 2, dans lequel on ajoute des germes de magadiite en une proportion de 10 % en poids.

4. Procédé conforme à la revendication 1, dans lequel on remplace une partie de la silice SiO₂ par une entité de type borate B₂O₄, de sorte que le produit obtenu est une magadiite synthétique lamellaire borée, qui peut être traitée avec de l'aluminate de sodium pour donner une magadiite synthétique lamellaire aluminée.

5. Magadiite synthétique accessible par un procédé conforme à l'une des revendications précédentes, de laquelle magadiite synthétique une fraction de plus de 50 % en poids est de la magadiite lamellaire.

6. Magadiite synthétique conforme à la revendication 5, de laquelle magadiite synthétique une fraction de plus de 80 % en poids est de la magadiite lamellaire.

7. Magadiite synthétique conforme à la revendication 6, de laquelle magadiite synthétique une fraction de plus de 90 % en poids est de la magadiite lamellaire.

8. Procédé de production d'un gel de silice, qui comporte le fait de mettre une magadiite synthétique lamellaire, conforme à l'une des revendications 5 à 7, en contact avec un acide, au sein d'un liquide aqueux.

9. Procédé de production d'un gel de silice, qui comporte le fait de mettre une magadiite synthétique lamellaire, conforme à l'une des revendications 5 à 7, en contact avec de la silice colloïdale et un acide, au sein d'un liquide aqueux.

10. Magadiite synthétique lamellaire conforme à l'une des revendications 5 à 7, de laquelle magadiite synthétique lamellaire au moins une partie des ions sodium ont été échangés contre des ions hydrogène pour former une magadiite synthétique lamellaire acidifiée.

11. Magadiite synthétique lamellaire conforme à la revendication 10, de laquelle magadiite synthétique lamellaire plus de 90 % des ions sodium ont été échangés contre des ions hydrogène pour former une magadiite synthétique lamellaire acidifiée.

12. Magadiite synthétique lamellaire acidifiée conforme à la revendication 11, laquelle magadiite synthétique lamellaire acidifiée l'on a chauffée suffisamment pour en chasser l'eau et obtenir ainsi de la silice en lamelles.

13. Magadiite synthétique lamellaire acidifiée conforme à la revendication 10 ou 11, de laquelle magadiite synthétique lamellaire acidifiée les groupes hydroxyle de surface ont été alkylés.

14. Magadiite synthétique lamellaire acidifiée conforme à la revendication 13, de laquelle magadiite synthétique lamellaire acidifiée les groupes hydroxyle de surface ont été butylés.
